# FASCICULE DE BREVET EUROPEEN

(11) **EP 3 130 507 B1**
(45) Date de publication et mention de la délivrance du brevet: **02.10.2019**
(21) Numéro de dépôt: 16183139.1
(22) Date de dépôt: 05.08.2016
(51) Int. Cl.: B60P 7/08, B60P 7/15

(54) **SYSTÈME ET RAIL D'ARRIMAGE**
BEFESTIGUNGSSYSTEM UND -SCHIENE
DOCKING SYSTEM AND RAIL

(30) Priorité: 13.08.2015 FR 1570021; 20.08.2015 FR 1570027
(43) Date de publication de la demande: 15.02.2017
(73) Titulaire: Pommier, 95310 Saint Ouen l'Aumone (FR)
(72) Inventeur: AUBIGNAT, Frédéric, 60660 CIRES LES MELLO (FR)
(74) Mandataire: Berger, Helmut

(56) Documents cités:
- DE-U1- 20 317 183
- DE-U1- 29 708 615
- FR-A1- 2 967 982
- FR-A3- 2 935 316

## Description

L'invention concerne un système d'arrimage d'un objet sur une paroi de support, notamment d'un véhicule de transport d'objets, du type comprenant au moins un rail d'arrimage destiné à être fixé sur la paroi de support, qui est pourvu d'un moyen d'appui de l'objet arrimé, et un dispositif de maintien de l'objet dans sa position arrimée, qui comprend des moyens d'arrimage fixes solidaires de la paroi de support et un lien de maintien dont les extrémités sont connectables aux moyens d'arrimage fixes et qui entoure partiellement l'objet. L'invention vise un rail d'arrimage et un système d'arrimage. Le document FR 2 935 316 A3 décrit un dispositif de fixation de moyens d'arrimage d'objets à une paroi.

Il est bien connu un système d'arrimage d'objets sur une paroi, notamment d'un véhicule tel un camion de déménagement, comprenant deux rails horizontaux parallèles et verticalement écartés l'un de l'autre, de section en forme d'oméga et dont la face d'appui est recouverte d'une bande de moquette. Les moyens d'arrimage fixes sont séparés du rail et constitués d'un tube d'arrimage disposé entre les deux rails et solidarisé à la paroi via une pluralité de pontets de fixation, et d'un lien du type sangle, corde ou tendeur dont les extrémités sont connectables au tube d'arrimage par des crochets.

Cependant, la bande de moquette recouvrant la surface d'appui d'un tel système s'use rapidement suite aux contacts répétés avec les objets arrimés. D'autre part les crochets du lien d'arrimage sont susceptibles de se déplacer le long du câble d'arrimage sous le poids de cet objet. Ainsi, lors du déplacement du véhicule de transport, il existe un risque non négligeable de déplacement des objets arrimés dans le véhicule, induisant de possibles dégradations des objets et de la paroi de support.

D'autre part, un tel système dont le rail et les moyens d'arrimage fixes sont séparés est encombrant et n'assure pas un arrimage satisfaisant des objets sur la paroi de support.

La présente invention a pour but de pallier les inconvénients ci-dessus de l'art antérieur.

Pour atteindre ce but, le système selon l'invention est caractérisé en ce que les moyens d'arrimage fixes sont solidaires du rail.

Selon l'invention, le rail comprend une pluralité de modules de rail assemblés entre eux dans la direction longitudinale, chaque module
comprenant sur ses faces d'extrémité en regard des moyens de centrage dans la position alignée.

Selon une autre caractéristique, le rail comporte une partie de surface à texture grainée constituant le moyen d'appui.

Selon une autre caractéristique, le rail comprend une rainure longitudinale en forme de U séparant le rail en deux éléments de rail parallèles situés dans un même plan, réunis entre eux par la base du U par laquelle le rail est fixé à la paroi de support.

Selon une autre caractéristique, les moyens d'arrimage fixes sont formés par des organes de pont interposés entre les éléments de rail transversalement dans la rainure.

Selon une autre caractéristique, le dispositif de maintien de l'objet dans sa position arrimée comprend au moins un dispositif d'accrochage monté dans la rainure.

Selon une autre caractéristique, un dispositif d'accrochage est monté entre deux organes de pont.

Selon une autre caractéristique, un dispositif d'accrochage est monté amoviblement entre deux organes de pont.

Selon une autre caractéristique, le dispositif d'accrochage comprend deux pênes chacun monté dans ledit dispositif entre une position sortie de blocage dans la rainure et une position rétractée à l'encontre d'un ressort de rappel.

Selon une autre caractéristique, un pêne est monté au niveau d'une face frontale du dispositif d'accrochage et s'engage entre l'organe de pont et le fond de la rainure.

Selon une autre caractéristique, la surface d'un pêne, qui est en regard de l'organe de pont lors de l'insertion du dispositif d'accrochage est réalisée sous la forme d'une rampe inclinée de façon à permettre le déplacement du pêne dans sa position rétractée lors de l'insertion du dispositif d'accrochage dans la rainure sous l'effet d'une force d'insertion par appui sur le dispositif.

Selon une autre caractéristique, un dispositif d'accrochage comprend une pluralité de trous borgnes de réception de tiges de maintien des objets dans leur position d'arrimage.

Selon une autre caractéristique, le système d'arrimage comprend deux rails d'arrimage dont l'un comprend un dispositif d'accrochage.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue en perspective de deux parois de support comprenant chacune deux systèmes d'arrimage, et montrant un objet arrimé aux systèmes ;
- La figure 2 est une vue en perspective d'un rail d'arrimage selon l'invention ;
- Les figures 3a et 3b représentent respectivement une vue en perspective et en coupe selon la ligne III-III de la figure 3a d'un dispositif d'accrochage insérée dans la rainure du rail
- Les figures 4a à 4c représentent respectivement une vue du dispositif d'accrochage de dessus, de dessous et en coupe selon la ligne IV-IV de la figure 4a, un pêne étant en position sortie tandis que l'autre est en position rétractée ;
- Les figures 5a et 5b représentent respectivement une vue en perspective et en coupe selon la ligne V-V de la figure 5a d'un dispositif d'accrochage placé au-dessus et à distance du rail ;
- Les figures 6a et 6b représentent respectivement une vue en perspective et en coupe selon la ligne VI-VI de la figure 6a d'un dispositif d'accrochage dont les pênes au contact des organes de pont sont en partie rétractés sous l'effet d'une force d'insertion par appui sur le dispositif d'accrochage.

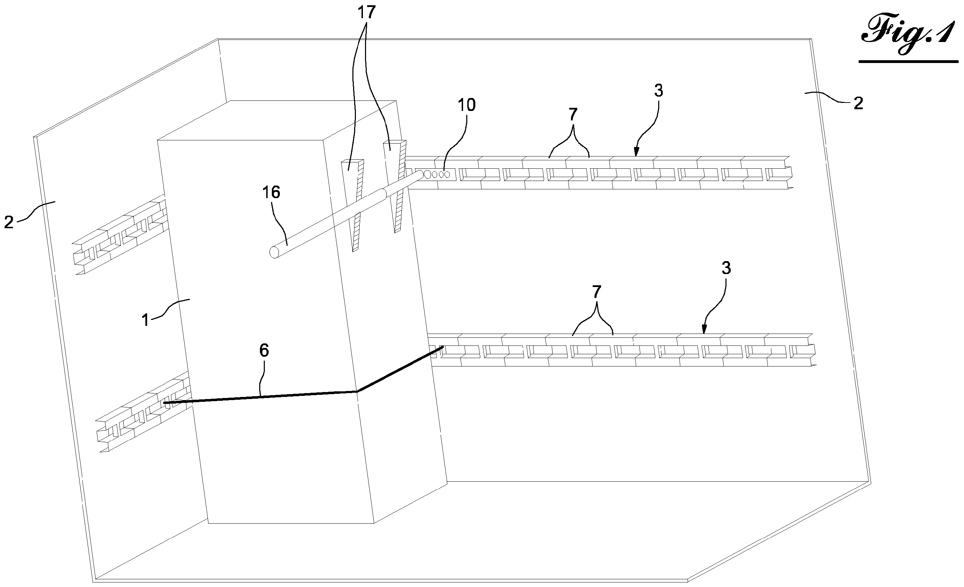

On décrit ci-après l'invention en se référant aux figures 1 à 6, qui a pour objet un système d'arrimage d'objets 1 sur une paroi de support 2, notamment une paroi de support d'un véhicule tel un véhicule de transport routier, aérien ou maritime.

La figure 1 représente l'arrimage d'un objet dans un coin de deux parois de support 2 perpendiculaires. La figure représente des rails 3 sur lesquels est arrimé un objet 1 selon deux modes de réalisation représentés par les références respectives 6 et 16.

La figure 1 montre deux parois de support 2 perpendiculaires l'une à l'autre, chacune comprenant deux rails d'arrimage 3 parallèles superposés : un rail supérieur et un rail inférieur. Les deux rails inférieurs et les deux rails supérieurs sont respectivement à la même hauteur.

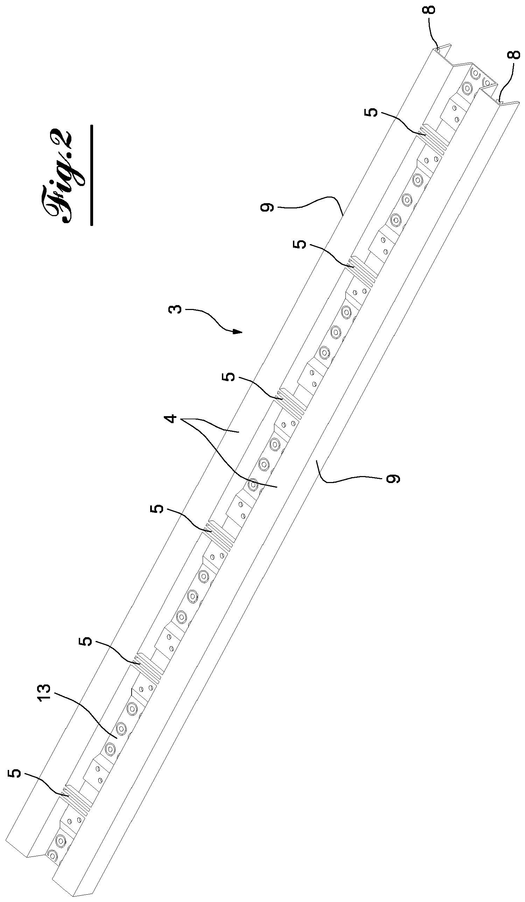

Sur la figure 2 est représenté un rail d'arrimage 3 selon l'invention. Ce rail, réalisé en un matériau rigide tel le plastique ou le métal, est rectiligne et fixé sur la paroi. Le rail 3 comprend une rainure longitudinale en forme de U, qui sépare le rail en deux éléments de rail 9 parallèles situés dans un même plan. Ces deux éléments de rail 9, en forme de U inversé, sont réunis entre eux par la base 13 du U, c'est-à-dire le fond de la rainure, au niveau d'une extrémité d'une jambe du U de chaque élément de rail 9.

Le rail 3 est fixé à la paroi 2 par la base 13 de la rainure par tout moyen connu et approprié. Par exemple et de manière préférentielle, la base 13 de la rainure comprend une pluralité de trous pour permettre le passage de vis destinées à visser le rail 3 sur la paroi de support 2.

Les surfaces planes des éléments de rail 9 comportent des éléments en relief et sont avantageusement réalisées sous forme de surfaces grainées au moins en partie. Les éléments en relief constituent le moyen d'appui 4 adapté pour éviter le glissement de l'objet arrimé.

Selon une caractéristique essentielle de l'invention, le rail d'arrimage 3 comprend des moyens d'arrimage fixes 5 de l'objet 1 dans sa position arrimée. Dans l'exemple représenté, ces moyens d'arrimage fixes 5 sont des organes de pont, interposés entre les éléments de rail 9, transversalement dans la rainure, et réalisés avantageusement dans le même matériau que le rail d'arrimage 3, de préférence en une pièce.

Le système d'arrimage comprend également, associé à chaque rail, un lien de maintien 6 de l'objet arrimé, tel une sangle ou un tendeur, dont les extrémités sont connectables par exemple à l'aide d'un crochet aux organes de pont 5 transversaux pour partiellement entourer l'objet 1, ce lien de maintien 6 associé aux organes de pont 5 formant un dispositif de maintien de l'objet dans sa position arrimée.

Le rail d'arrimage 3 peut être formé d'une seule pièce. Selon un autre mode de réalisation, comme cela est visible sur la figure 1, le rail d'arrimage 3 comprend une pluralité de modules de rail 7 assemblés entre eux dans la direction longitudinale. Chaque module 7 comprend sur une de ses faces d'extrémité des moyens de centrage 8 permettant l'assemblage des modules 7 dans la position alignée. Ces moyens de centrage 8 comprennent, dans l'exemple représenté à la figure 2, deux ergots en forme de L faisant saillie au niveau des coins de la face frontale d'un élément de rail 9, et adaptés pour s'engager dans les coins de la face frontale du module adjacent.

Chaque module 7 peut comprendre un ou plusieurs organes de pont 5. Que le rail 3 soit formé d'une pièce ou d'un assemblage de modules 7, la distance longitudinale séparant deux organes de pont 5 est la même sur toute la longueur du rail 3.

En plus des organes de pont 5, l'invention prévoit au moins un dispositif d'accrochage 10, chacun étant monté dans la rainure du rail entre deux organes de pont 5. Préférentiellement, ce dispositif d'accrochage 10 est monté de manière amovible, d'une manière qui sera décrite plus loin.

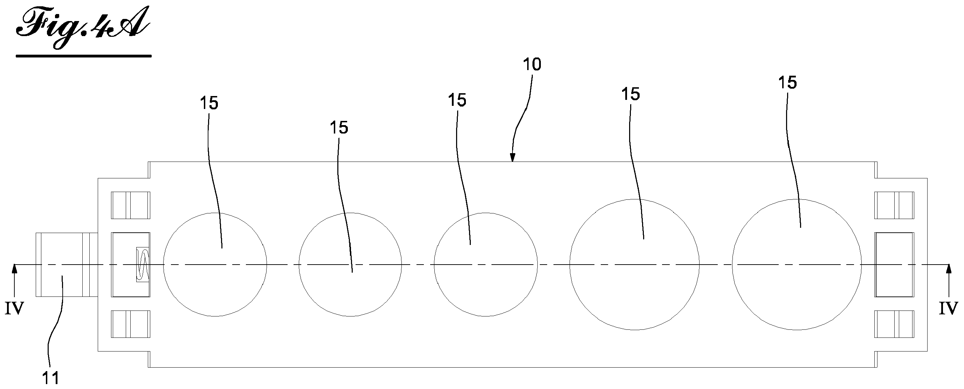

Comme on le voit sur les figures 4a à 4c, le dispositif d'accrochage 10 a une forme générale parallélépipédique, s'adaptant ainsi à la forme de la rainure du rail. Le dessus du dispositif d'accrochage, c'est-à-dire la face qui n'est pas en vis-à-vis du fond de la rainure, est représenté en figure 4a. la face du dessus comprend une pluralité de cavités borgnes 15, dont les diamètres peuvent être identiques ou différents suivant les dispositifs d'accrochage 10, et dont les axes sont parallèles entre eux et perpendiculaires à la paroi de support 2. Ces cavités, ou trous borgnes 15 sont destinés à recevoir des tiges de maintien 16 des objets 1 dans leur position d'arrimage, comme cela est représenté à la figure 1. Pour plus de commodité, ces tiges 16 sont télescopiques.

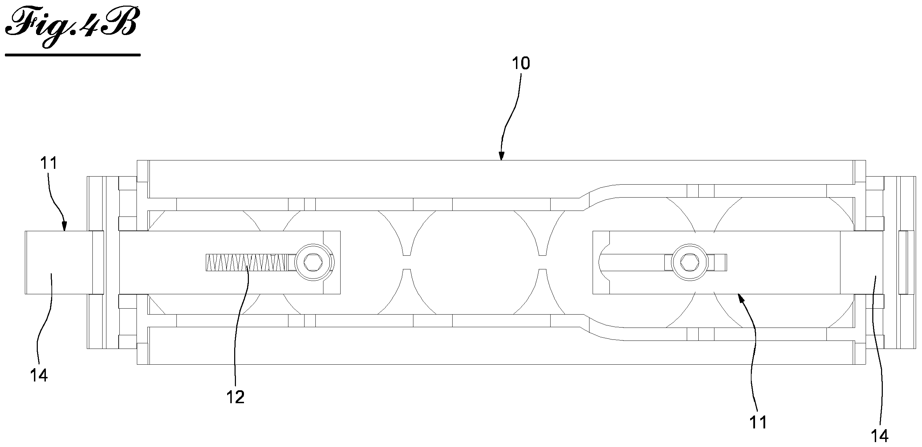

La figure 4b représente la face du dessous du dispositif d'accrochage 10, et laisse apparaitre deux pênes 11 chacun monté dans la face d'extrémité du dispositif 10. Chaque pêne 11 est monté axialement coulissant en étant guidé dans une découpe dans l'extrémité du corps du dispositif d'accrochage 10 et par une vis de guidage fixée dans le corps du dispositif d'accrochage 10 et s'engageant dans une rainure axiale du pêne 11 située le long de la face inférieure dudit pêne 11, dans la partie interne du pêne 11.

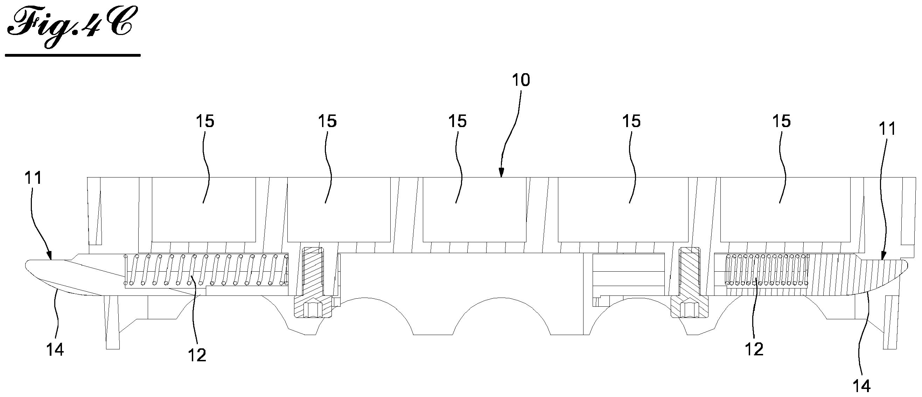

Chaque pêne 11 est monté axialement coulissant dans le dispositif 10 au niveau de la face frontale, entre une position sortie en saillie axiale de la face frontale du dispositif d'accrochage 10 qui permet le blocage du dispositif 10 dans la rainure, et une position rétractée à l'encontre d'un ressort de rappel 12, par exemple un ressort hélicoïdal. Les figures 4b et 4c montrent d'ailleurs un pêne 11 en position sortie et un pêne 11 en position rétractée.

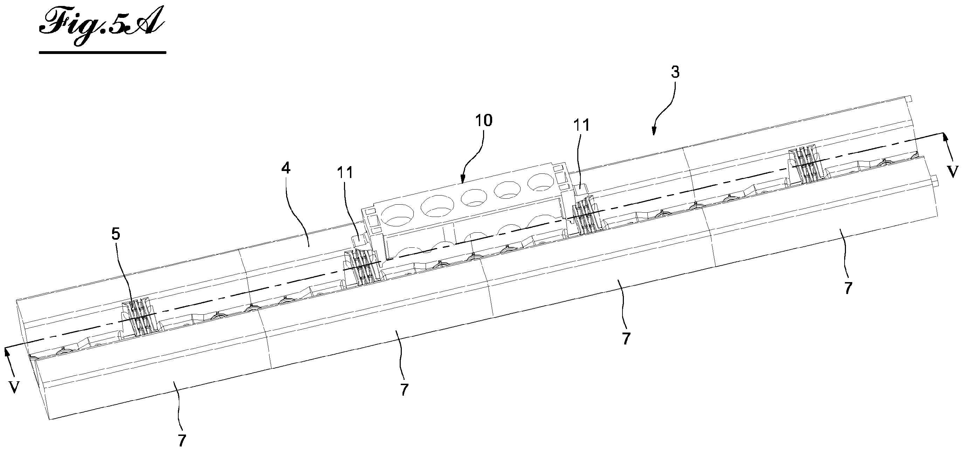

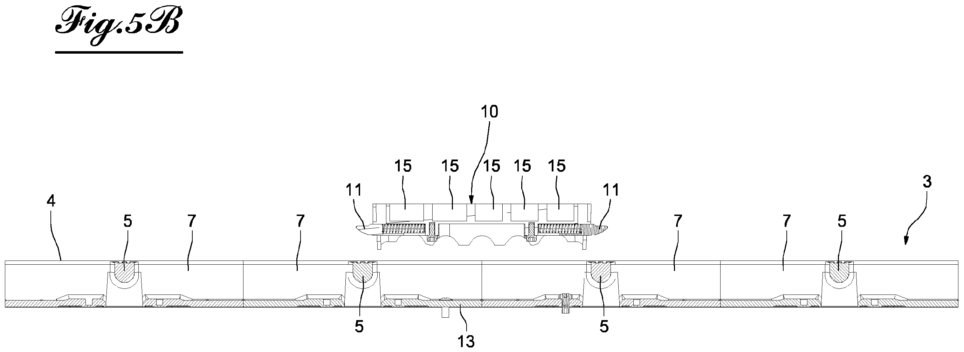

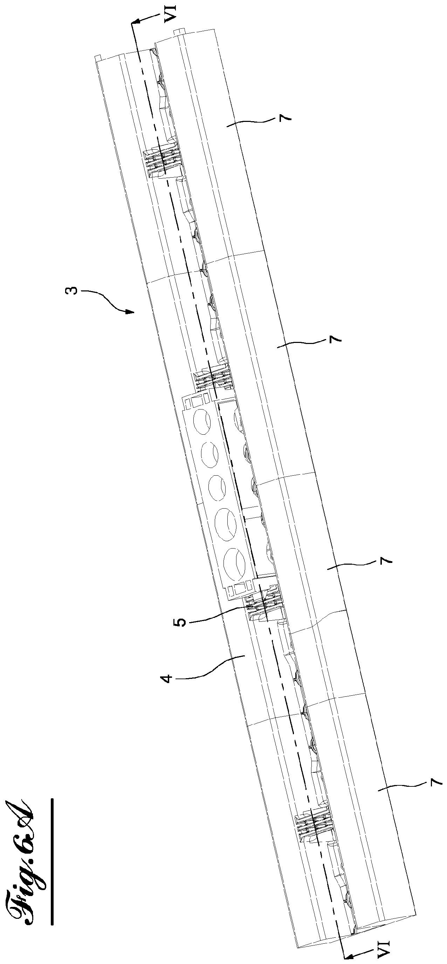

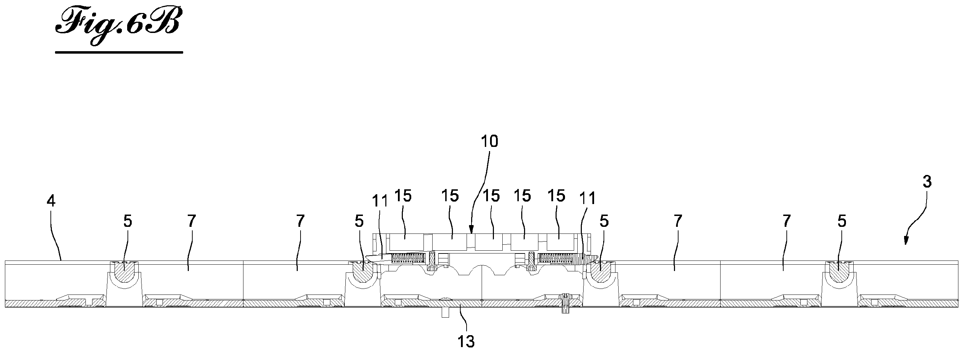

Les figures 5 et 6 montrent l'insertion d'un dispositif d'accrochage 10 dans la rainure du rail d'arrimage entre deux organes de pont 5.

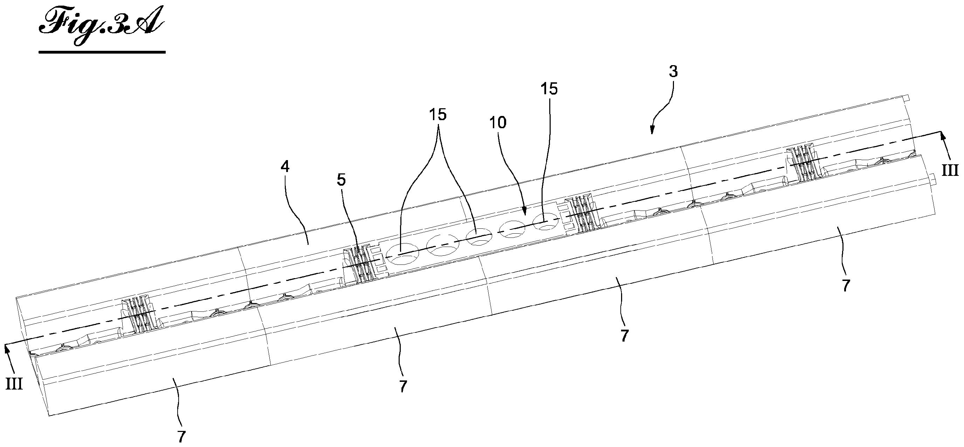

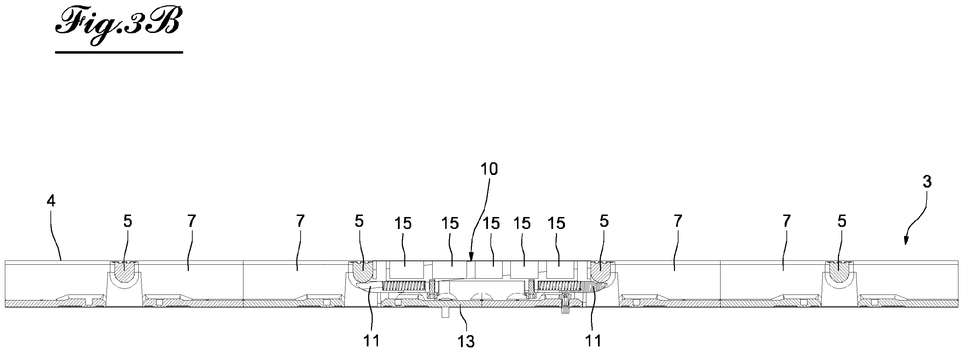

La figure 5 illustre le rail 3 et le dispositif d'accrochage 10 avant l'insertion de ce dernier et avant qu'il ne soit au contact du rail 3. La longueur du dispositif d'accrochage, lorsque les pênes 11 sont en position rétractée, correspond sensiblement à la distance entre deux organes de pont 5. Une fois le dispositif d'accrochage 10 inséré, les pênes 11 en position sortie bloquent alors le dispositif d'accrochage dans la rainure, chaque pêne étant engagé entre l'organe de pont 5 et le fond de la rainure 13 comme cela est visible à la figure 3.

La figure 6 montre le dispositif d'accrochage 10 dans une position prête pour l'insertion. La surface inférieure 14 du pêne 11 en regard de l'organe de pont 5 vient au contact avec le bord supérieur correspondant dudit organe de pont 5. Cette surface 14 a la forme d'une rampe inclinée et peut même présenter une courbure, comme cela est visible sur les figures. Ainsi une force d'insertion F, résultant de l'appui sur le dispositif d'accrochage 10 pour l'insérer dans la rainure, provoque le déplacement du pêne 11 dans sa position rétractée. La poursuite de l'insertion du dispositif 10 dans la rainure provoque à un moment la libération des pênes 11 lorsque chaque pêne se retrouve en dessous du bord inférieur de l'organe de pont 5 correspondant, chacun adoptant alors une position sortie et se retrouvant engagé entre le fond de la rainure 13 et un organe de pont 5.

Un utilisateur peut facilement désengager un dispositif d'accrochage 10 de la rainure. Il lui suffit d'appuyer axialement sur la pointe des pênes 11 pour les rentrer dans le dispositif d'accrochage 10 et leur faire adopter la position rétractée, puis de faire remonter progressivement le dispositif 10 de la rainure tout en maintenant la force d'appui sur les pênes 11, jusqu'à ce que ces derniers soient en butée contre les organes de pont 5. Il ne reste alors plus à l'utilisateur qu'à saisir le dispositif d'accrochage 10 et le sortir complètement de la rainure du rail 3.

La figure 1 montre les deux possibilités d'arrimage selon l'invention qui vient d'être décrite. Dans l'exemple représenté, un des rails supérieurs 3 comprend un dispositif d'accrochage 10 inséré entre deux organes de pont 5, une tige télescopique 16 étant insérée dans un des trous borgnes 15 dudit dispositif d'accrochage 10 pour maintenir l'objet dans sa position d'arrimage. Pour assurer le maintien de l'objet 1, dans le cas où il y existe un espace entre la tige 16 et l'objet 1 dans sa position d'arrimage, une cale 17 en V est insérée entre l'objet 1 et la tige 16, comme cela est représenté à la figure 1.

Un système d'arrimage selon l'invention présente l'avantage d'être plus simple et plus rapide à monter, et bénéficie d'une grande ergonomie grâce à sa présentation en modules 7 et à sa faible occupation surfacique. Le système d'arrimage permet également un meilleur maintien des objets 1 dans leur position d'arrimage, assurant une protection plus efficace des objets 1, surtout dans le cadre du transport de tels objets. Au niveau du rail inférieur, l'arrimage peut être effectué à l'aide d'une sangle, d'une corde ou d'un tendeur fixé par ses extrémités sur les organes de pont 5 des rails inférieurs grâce à des crochets.

La configuration telle que décrite n'est pas limitée aux modes de réalisation décrits précédemment et représentés sur les figures. Elle n'a été donnée qu'à titre d'exemple non limitatif. De multiples modifications peuvent être apportées. En particulier, il est possible d'imaginer un dispositif d'accrochage 10 présentant des éléments d'arrimage ayant la même fonction que les organes de ponts 5 du rail 3. Une telle configuration permettrait de disposer d'éléments d'accrochages rapprochés, permettant ainsi un réglage plus fin de l'arrimage des objets 1 à l'aide d'un tel dispositif d'accrochage 10 et d'un lien d'arrimage 6.

## Revendications

1. Système d'arrimage d'un objet (1) sur une paroi de support (2), notamment d'un véhicule de transport d'objets, du type comprenant au moins un rail d'arrimage (3) destiné à être fixé sur la paroi de support (2), qui est pourvu d'un moyen d'appui (4) de l'objet arrimé, et un dispositif de maintien de l'objet dans sa position arrimée, qui comprend des moyens d'arrimage fixes (5) solidaires du rail (3) et un lien de maintien (6) dont les extrémités sont connectables aux moyens d'arrimage fixes (5) et qui entoure partiellement l'objet (1), **caractérisé en ce que** le rail (3) comprend une pluralité de modules (7) de rail assemblés entre eux dans la direction longitudinale, chaque module (7) comprenant sur ses faces d'extrémité en regard des moyens de centrage (8) dans la position alignée.

2. Système selon la revendication 1, **caractérisé en ce que** le rail (3) comporte une partie de surface à texture grainée constituant le moyen d'appui (4).

3. Système selon l'une quelconque des revendications 1 ou 2, **caractérisé en ce que** le rail comprend une rainure longitudinale en forme de U séparant le rail en deux éléments (9) de rail parallèles situés dans un même plan, réunis entre eux par la base du U par laquelle le rail (3) est fixé à la paroi de support (2).

4. Système selon la revendication 3, **caractérisé en ce que** les moyens d'arrimage fixes (5) sont formés par des organes de pont interposés entre les éléments (9) de rail transversalement dans la rainure.

5. Système selon l'une quelconque des revendications 3 ou 4, **caractérisé en ce que** le dispositif de maintien de l'objet dans sa position arrimée comprend au moins un dispositif d'accrochage (10) montés dans la rainure.

6. Système selon la revendication 5, **caractérisé en ce qu'**un dispositif d'accrochage (10) est monté entre deux organes de pont (5).

7. Système selon la revendication 6, **caractérisé en ce qu'**un dispositif d'accrochage (10) est monté amoviblement entre deux organes de pont (5).

8. Système selon l'une quelconque des revendications 5 à 7, **caractérisé en ce que** le dispositif d'accrochage (10) comprend deux pênes (11) chacun monté dans ledit dispositif (10) entre une position sortie de blocage dans la rainure et une position rétractée à l'encontre d'un ressort de rappel (12).

9. Système selon la revendication 8, **caractérisé en ce qu'**un pêne (11) est monté au niveau d'une face frontale du dispositif d'accrochage (10) et s'engage entre l'organe de pont (5) et le fond de la rainure (13).

10. Système selon l'une quelconque des revendications 8 ou 9, **caractérisé en ce que** la surface (14) d'un pêne (11), qui est en regard de l'organe de pont (5) lors de l'insertion du dispositif d'accrochage (10) est réalisée sous la forme d'une rampe inclinée de façon à permettre le déplacement du pêne (11) dans sa position rétractée lors de l'insertion du dispositif d'accrochage dans la rainure sous l'effet d'une force d'insertion par appui sur le dispositif.

11. Système selon l'une quelconque des revendications 5 à 10, **caractérisé en ce qu'**un dispositif d'accrochage (10) comprend une pluralité de trous borgnes (15) de réception de tiges de maintien (16) des objets dans leur position d'arrimage.

12. Système d'arrimage selon l'une quelconque des revendications 5 à 11, **caractérisé en ce qu'**il comprend deux rails d'arrimage 3 dont l'un comprend un dispositif d'accrochage 10.

## Patentansprüche

1. System zur Befestigung eines Objekts (1) auf einer Tragewand (2), insbesondere eines Fahrzeugs zum Transport von Objekten, vom Typ umfassend mindestens eine Befestigungsschiene (3), die ausgelegt ist, um an der Tragewand (2) fixiert zu sein, die mit einem Mittel zur Auflage (4) des befestigten Objekts und einer Vorrichtung zum Festhalten des Objekts in seiner befestigten Position ausgestattet ist, die fixierte Befestigungsmittel (5) umfasst, die fest mit der Schiene (3) verbunden sind, und eine Festhalteverbindung (6), deren Enden mit den fixierten Befestigungsmitteln (5) verbunden werden können, und die teilweise das Objekt (1) umgibt, **dadurch gekennzeichnet, dass** die Schiene (3) eine Vielzahl von Schienenmodulen (7) umfasst, die untereinander in der Längsrichtung montiert sind, wobei jedes Modul (7) auf seinen gegenüberliegenden Endseiten Zentrierungsmittel (8) in der ausgefluchteten Position umfasst.

2. System nach Anspruch 1, **dadurch gekennzeichnet, dass** die Schiene (3) einen Teil der Oberfläche mit gekörnter Textur umfasst, die das Auflagemittel (4) darstellt.

3. System nach einem der Ansprüche 1 oder 2, **dadurch gekennzeichnet, dass** die Schiene eine längs gerichtete Nut in Form eines U umfasst, die die Schiene in zwei parallele Schienelemente (9) trennt, die sich auf einer gleichen Ebene befinden, die untereinander durch die Basis des U verbunden sind, durch die die Schiene (3) an die Tragewand (2) fixiert ist.

4. System nach Anspruch 3, **dadurch gekennzeichnet, dass** die fixierten Befestigungsmittel (5) durch Brückenorgane gebildet sind, die zwischen die Schienenelemente (9) quer in die Nut gestellt sind.

5. System nach einem der Ansprüche 3 oder 4, **dadurch gekennzeichnet, dass** die Vorrichtung zum Festhalten des Objekts in seiner befestigten Position mindestens eine Aufhängevorrichtung (10) umfasst, die in der Nut montiert ist.

6. System nach Anspruch 5, **dadurch gekennzeichnet, dass** eine Aufhängevorrichtung (10) zwischen zwei Brückenorganen (5) montiert ist.

7. System nach Anspruch 6, **dadurch gekennzeichnet, dass** eine Aufhängevorrichtung (10) entfernbar zwischen zwei Brückenorganen (5) montiert ist.

8. System nach einem der Ansprüche 5 bis 7, **dadurch gekennzeichnet, dass** die Aufhängevorrichtung (10) zwei Riegel (11) umfasst, die jeweils in der Vorrichtung (10) zwischen einer ausgezogenen Position zur Blockierung in der Nut und einer gegen eine Rückstellfeder (12) zurückgezogenen Position montiert sind.

9. System nach Anspruch 8, **dadurch gekennzeichnet, dass** ein Riegel (11) auf der Ebene einer frontalen Seite der Aufhängevorrichtung (10) montiert ist und zwischen dem Brückenorgan (5) und dem Boden der Nut (13) eingreift.

10. System nach einem der Ansprüche 8 oder 9, **dadurch gekennzeichnet, dass** die Oberfläche (14) eines Riegels (11), die bei der Einführung des Aufhängevorrichtung (10) gegenüber dem Brückenorgan (10) liegt, in Form einer geneigten Rampe durchgeführt ist, um eine Verschiebung des Riegels (11) in seine zurückgezogene Position bei der Einführung der Aufhängevorrichtung in die Nut unter der Wirkung einer Einführungskraft durch Auflage auf der Vorrichtung zu ermöglichen.

11. System nach einem beliebigen der Ansprüche 5 bis 10, **dadurch gekennzeichnet, dass** eine Aufhängevorrichtung (10) eine Vielzahl von Grundlöchern (15) zur Aufnahme der von Festhaltestangen (16) der Objekte in ihrer Befestigungsposition umfasst.

12. Befestigungsystem nach einem beliebigen der Ansprüche 5 bis 11, **dadurch gekennzeichnet, dass** es zwei Befestigungsschienen 3 umfasst, von denen eine eine Aufhängevorrichtung 10 umfasst.

## Claims

1. A system for docking an object (1) on a support wall (2), in particular of an object transport vehicle, of the type comprising at least one docking rail (3) intended to be fastened on the support wall (2), which is provided with a bearing means (4) of the docked object, and a device for holding the object in its docked position, which comprises stationary docking means (5) secured to the rail (3) and a holding link (6) whereof the ends can be connected to the stationary docking means (5) and which partially surrounds the object (1), **characterized in that** the rail (3) comprises a plurality of rail modules (7) assembled to one another in the longitudinal direction, each module (7) comprising, on its facing end faces, centering means (8) in the aligned position.

2. The system according to claim 1, **characterized in that** the rail (3) includes a surface part with a grainy texture making up the bearing means (4).

3. The system according to any one of claims 1 or 2, **characterized in that** the rail comprises a U-shaped longitudinal groove separating the rail into two parallel rail elements (9) located in a same plane, joined to one another by the base of the U by which the rail (3) is fastened to the support wall (2) .

4. The system according to claim 3, **characterized in that** the stationary docking means (5) are formed by bridge members inserted between the rail elements (9) transversely in the groove.

5. The system according to any one of claims 3 or 4, **characterized in that** the device for holding the object in its docked position comprises at least one catching device (10) mounted in the groove.

6. The system according to claim 5, **characterized in that** a catching device (10) is mounted between two bridge members (5).

7. The system according to claim 6, **characterized in that** a catching device (10) is mounted removably between two bridge members (5).

8. The system according to any one of claims 5 to 7, **characterized in that** the catching device (10) comprises two bolts (11) each mounted in said device (10) between a deployed blocking position in the groove and a retracted position against a return spring (12).

9. The system according to claim 8, **characterized in that** a bolt (11) is mounted at a front face of the catching device (10) and engages between the bridge member (5) and the bottom of the groove (13).

10. The system according to any one of claims 8 or 9, **characterized in that** the surface (14) of a bolt (11), which faces the bridge member (5) during the insertion of the catching device (10), is made in the form of a ramp inclined so as to allow the movement of the bolt (11) into its retracted position during the insertion of the catching device into the groove under the effect of an insertion device by bearing on the device.

11. The system according to any one of claims 5 to 10, **characterized in that** a catching device (10) comprises a plurality of blind holes (15) for receiving maintaining rods (16) for keeping the objects in their docked position.

12. The docking system according to any one of claims 5 to 11, **characterized in that** it comprises two docking rails (3), one of which comprises a docking device (10).
